# EUROPÄISCHE PATENTSCHRIFT

(11) **EP 4 277 472 B1**
(45) Veröffentlichungstag und Bekanntmachung des Hinweises auf die Patenterteilung: **13.08.2025**
(21) Anmeldenummer: 22700043.7
(22) Anmeldetag: 03.01.2022
(51) Int. Cl.: A23K 20/142, A23K 50/75

(54) **VERWENDUNG EINES FUTTERMITTELADDITIVES IN PROTEINARMEM FUTTER FÜR GEFLÜGEL**
USE OF AN ANIMAL FEED ADDITIVE IN LOW-PROTEIN FEED FOR POULTRY
UTILISATION D'UN ADDITIF D'ALIMENTS POUR ANIMAUX DANS DES ALIMENTS À FAIBLE TENEUR EN PROTÉINES POUR LA VOLAILLE

(30) Priorität: 12.01.2021 DE 102021100383
(43) Veröffentlichungstag der Anmeldung: 22.11.2023
(73) Patentinhaber: Alzchem Trostberg GmbH, 83308 Trostberg (DE)
(72) Erfinder: SANS, Jürgen, 83308 Trostberg (DE); ALBER, Robert, 93209 Prien (DE)
(74) Vertreter: Weickmann & Weickmann PartmbB
(86) Internationale Anmeldenummer: PCT/EP2022/050013
(87) Internationale Veröffentlichungsnummer: WO 2022/152583

(56) Entgegenhaltungen:
- AKINDE D.O.: "Amino acid efficiency with dietary glycine supplementation: Part 1", WORLD'S POULTRY SCIENCE JOURNAL, vol. 70, no. 3, 1 September 2014 (2014-09-01), GB, pages 461 - 474, XP055908750, ISSN: 0043-9339, Retrieved from the Internet <URL:http://dx.doi.org/10.1017/S004393391400052X> DOI: 10.1017/S004393391400052X
- VIEIRA S.L. ET AL: "Optimizing broiler performance using different amino acid density diets: What are the limits?", JOURNAL OF APPLIED POULTRY RESEARCH, vol. 21, no. 1, 1 March 2012 (2012-03-01), US, pages 149 - 155, XP055908770, ISSN: 1056-6171, Retrieved from the Internet <URL:http://dx.doi.org/10.3382/japr.2011-00476> DOI: 10.3382/japr.2011-00476
- KHAJALI F. ET AL: "Guanidinoacetic acid as a feed supplement for poultry", WORLD'S POULTRY SCIENCE JOURNAL, vol. 76, no. 2, 2 April 2020 (2020-04-02), GB, pages 270 (275) - 291 (296), XP055908730, ISSN: 0043-9339, Retrieved from the Internet <URL:http://dx.doi.org/10.1080/00439339.2020.1716651> DOI: 10.1080/00439339.2020.1716651
- AKINDE D.O.: "Amino acid efficiency with dietary glycine supplementation: Part 2", WORLD'S POULTRY SCIENCE JOURNAL, vol. 70, no. 3, 1 September 2014 (2014-09-01), GB, pages 575 - 584, XP055908743, ISSN: 0043-9339, Retrieved from the Internet <URL:http://dx.doi.org/10.1017/S0043933914000622> DOI: 10.1017/S0043933914000622
- AGUIHE PASCHAL CHUKWUDI ET AL: "Dietary glycine equivalent and standardized ileal digestible methionine?+?cysteine levels for male broiler chickens fed low-crude-protein diets", CANADIAN JOURNAL OF ANIMAL SCIENCE., vol. 102, no. 1, 1 March 2022 (2022-03-01), CA, pages 19 - 29, XP055908752, ISSN: 0008-3984, Retrieved from the Internet <URL:http://dx.doi.org/10.1139/cjas-2021-0009> DOI: 10.1139/cjas-2021-0009
- ESSER AFG ET AL: "Effects of Guanidionoacetic Acid and Arginine Supplementation to Vegetable Diets Fed to Broiler Chickens Subjected to Heat Stress before Slaughter", REVISTA BRASILEIRA DE CIÊNCIA AVÍCOLA, vol. 19, no. 3, 1 September 2017 (2017-09-01), pages 429 - 436, XP055908699, ISSN: 1516-635X, Retrieved from the Internet <URL:http://dx.doi.org/10.1590/1806-9061-2016-0392> DOI: 10.1590/1806-9061-2016-0392
- ABUDABOS ALAELDEIN M. ET AL: "The Relationship Between Guanidino Acetic Acid and Metabolisable Energy Level of Diets on Performance of Broiler Chickens", ITALIAN JOURNAL OF ANIMAL SCIENCE, vol. 13, no. 3, 1 January 2014 (2014-01-01), pages 3269, XP055908516, DOI: 10.4081/ijas.2014.3269
- DAVID H BAKER: "Advances in protein-amino acid nutrition of poultry", AMINO ACIDS ; THE FORUM FOR AMINO ACID AND PROTEIN RESEARCH, SPRINGER-VERLAG, VI, vol. 37, no. 1, 14 November 2008 (2008-11-14), pages 29 - 41, XP019723342, ISSN: 1438-2199
- H J ALMQUIST ET AL: "CREATINE FORMATION IN THE CHICK", JOURNAL OF BIOLOGICAL CHEMISTRY, 1 January 1942 (1942-01-01), XP055731067, Retrieved from the Internet <URL:https://www.jbc.org/content/141/2/365.full.pdf> [retrieved on 20200916]
- DR PROF MARKUS ET AL: "Factors Influencing the Response of Broiler Chicken to Glycine Supplements in Low Crude Protein Diets", 1 January 2016 (2016-01-01), XP055908749, Retrieved from the Internet <URL:http://opus.uni-hohenheim.de/volltexte/2016/1190/pdf/Diss_Wolfgang_Siegert.pdf> [retrieved on 20220404]
- AMIRI MASOUMEH ET AL: "Efficacy of guanidinoacetic acid at different dietary crude protein levels on growth performance, stress indicators, antioxidant status, and intestinal morphology in broiler chickens subjected to cyclic heat stress", ANIMAL FEED SCIENCE AND TECHNOLOGY, ELSEVIER, AMSTERDAM, NL, vol. 254, 26 June 2019 (2019-06-26), XP085797911, ISSN: 0377-8401, [retrieved on 20190626], DOI: 10.1016/J.ANIFEEDSCI.2019.114208
- WEINDL PETRA: "Möglichkeiten und Grenzen proteinreduzierter Fütterung beim Geflügel", 1 October 2017 (2017-10-01), XP055908512, Retrieved from the Internet <URL:https://www.proteinmarkt.de/fileadmin/bilder/fachartikel/2017/FA_Proteinreduzierte-Gefluegelfuetterung.pdf> [retrieved on 20220404]

## Beschreibung

Die vorliegende Erfindung betrifft die Verwendung einer Zusammensetzung enthaltend Guanidinoessigsäure und Glycin in der Mast von Geflügel mit einem proteinarmen Futter.

Die Fixierung von Luftstickstoff kann nur durch Pflanzen und nicht von Tieren erfolgen. Nutztiere werden zur Fleischproduktion, d.h. zur Produktion von tierischen Proteinen gehalten. Nutztiere können ihre körpereigenen Proteine nur aus den gefütterten Proteinen bzw. den Aminosäuren aufbauen. Diese Aminosäuren stammen bei Nutztieren üblicherweise aus pflanzlichem Futter und in geringerer Menge (z.B. Fischmehl) aus tierischem Futter.

Ziel einer Fleischproduktion ist die optimale Bereitstellung aller benötigten Nährstoffe. Die optimale Zusammenstellung des Futtermittels kann unter verschiedenen Aspekten erfolgen. Diese können sein: der Bedarf des Tieres, das Tierwohl, Kostengesichtspunkte oder die Berücksichtigung von Umweltaspekten. Eine Empfehlung der Futtermittelzusammensetzung für verschiedene Tiere wird beispielsweise vom National Research Council US (NRC) herausgegeben. Eine Übersicht über die historische Entwicklung [Applegate, T.J., Angel, C.R. (2014) J. Appl. Poult. Res. 23: 567-575] der Futtermittelzusammensetzungen zeigt die diversen Gründe, wieso sich die Futtermittelempfehlungen mit der Zeit geändert haben.

Zudem sind in den letzten Jahren neue Faktoren hinzugekommen, die bei der Futtermittelzusammenstellung bisher unberücksichtigt blieben. So ist beispielsweise die Fütterung mit proteinreichem Futter aus Umweltgesichtspunkten schädlich. Die Fäces der Tiere enthalten mehr Stickstoff, der beispielsweise zu wasserschädlichen Nitraten abgebaut wird. Zudem wird vermehrt Ammoniak über die Stallluft emittiert. In diesem Zusammenhang ist auch die Produktion von pflanzlichen Proteinen und der hiermit aufzubringende Mehraufwand an Düngung mit Stickstoffdünger wie zum Beispiel Harnstoff zu nennen. Der Nutzen einer proteinarmen Diät für Masthühner mit Vorteilen auf die Umwelt wurde analysiert und beschrieben [Aletor V.A., Hamid I.I., Niess E., Pfeffer E. (2000) Journal of Science of Food and Agriculture 80: 547-554].

Als weitere Vorteile einer proteinarmen Ernährung wurden geringere Kosten aufgeführt. [Aftab U., Ashraf M., Jiang Z., (2006) World's Poultry Science Journal, 62: 688-701]. Ein Futtermittel mit einem hohen Gehalt an pflanzlichen Proteinen ist im allgemeinen teurer als ein Futtermittel mit niedrigem Gehalt an pflanzlichen Proteinen bei gleichem Energiegehalt. Auch ein Gesundheitseffekt bei einer proteinarmen Ernährung ist erkennbar. Das Wachstum von unerwünschten oder pathogenen Keimen wird mit einer proteinarmen Diät reduziert [Namroud N.F., Shivazad M., Zaghari M., (2008) Poultry Science, 87: 2250-2258].

Jedoch kann eine proteinarme Ernährung auch Nachteile mit sich bringen. Eine mangelnde Versorgung mit Proteinen kann dazu führen, dass wichtige Körperfunktionen nicht oder nicht mehr ausreichend durchgeführt werden. Verschiedene mögliche Gründe von nachteiligen Effekten bei einer proteinarmen Ernährung von Masthühnchen und die Auswirkungen bei einem Mangel an ausgewähltem Protein wurden untersucht [Khajali F., Widemann R.F., (2010) World's Poultry Science, 66: 751-766]. Tiefergehende Untersuchungen zeigten bei allen Tieren als Effekte unter anderem eine Proteinmangeldystrophie, Ödembildung und eine reduzierte Wachstumsrate. Klinisch-chemisch geht Proteinmangel einher mit erniedrigten Werten für Serumalbumin, niedrigen Hämoglobinwerten und vermindertem extrazellulärem Kalium. Körperliche Erscheinungen sind häufige Infektionen, Diarrhö, Hypothermie und Kachexie. Bei Masthähnchen ist das Auftreten einer pulmonalen Hypertonie als Effekt einer Protein-Mangelernährung beschrieben [Behrooj N., Khajali F., Hassanpour H., (2012) British Poultry Science, 53: 658-664].

Bei der Ernährung von Nutztieren ist also eine derart ausgewogene Proteingabe sinnvoll, die zum einen möglichst proteinarm ist, um die Vorteile der proteinarmen Ernährung zu nutzen, andererseits proteinreich genug, um die Mangelerscheinungen zu vermeiden. In der betrieblichen Praxis ist es aufgrund von natürlichen Schwankungen im angebotenen Futter und aufgrund eines unterschiedlichen Bedarfs jedes einzelnen Tieres schwierig bis unmöglich, genau die optimale Zusammensetzung zu treffen, so dass nur die Vorteile der proteinarmen Ernährung zum Tragen kommen, ohne dass Nachteile zu beobachten sind. In der Praxis wird beobachtet, dass bei einer proteinarmen Diät das Durchschnittsgewicht der Tiere geringer ist als bei einer normalen Diät [Sharifi M.R., Khajali F., Jonaghani B.A., Pour H.H., Safarpour A., (2016) Research on Animal Production, 14: 51].

Auch eine andere Standardabweichung und Varianz von Tieren oder Tierteilen oder eine Abweichung im Ausschlachtungsgrad kann bei veränderter Fütterung erfolgen. Die sogenannte Uniformität des Bestandes ist von vielen Faktoren abhängig. Züchter geben hierfür Empfehlungen heraus [Ross, Broiler-Management Handbook 2018, S.109 ff.]. Versuche, diese Nachteile zu umgehen, gab es durch Zugabe von essentiellen Aminosäuren. [Jiang Q., Waldroup P., Fritts C., (2005), Int. J. Poult. Sci. 4:115-122]. Jedoch konnte durch Zugabe von einzelnen essentiellen Aminosäuren der Nachteil der proteinarmen Ernährung relativ zur Standardernährung ebenso wenig ausgleichen werden wie durch die Supplementierung mit einer Kombination von essentiellen Aminosäuren [Si J., Fritts C., Burnham D., P.W. Waldroup, (2004) Int. J. Poult. Sci. 3: 46-50].

Weitere Versuche, diese Nachteile zu umgehen, gab es durch Zugabe von nicht-essentiellen Aminosäuren. Die Supplementierung mit Prolin, Glutaminsäure und Asparaginsäure zeigte nicht den gewünschten Effekt [Corzo A., Fritts C, Kidd M., (2005) Anim. Feed Sci. Tech. 118:319-327]. Positive Effekte stellten sich ein, wenn Glycin zu einer proteinarmen Diät mit 16 % Rohprotein gegeben wurden [Dean D, Bidner T., Southern L. (2006) Poult. Sci. 85:288-296; Awad E., Zulkifli I., (2015) Poult. Sci. 94:2772-2777]. Diese Effekte können erklärt werden dadurch, dass Glycin wesentlich im Keratin der Federn zu finden ist und die Supplementierung mit Glycin in erster Linie dem Verlust von Federn vorbeugt.

A. Abudabos et al., Italian Journal of Animal Science, Vol. 13 (2014), Seiten 548-556 beschreibt die Beziehung zwischen Guanidinoessigsäure und metabolisierbarer Energie von Futter auf die Leistung von Hühnern. Dabei wird Guanidinoessigsäure verschiedenen Futtermitteln zugesetzt
Zusammenfassend bleibt festzuhalten, dass es noch keine wirtschaftliche Methode gibt, um die Nachteile einer proteinarmen Ernährung von Geflügel vollständig auszugleichen.

Der vorliegenden Erfindung liegt daher die Aufgabe zugrunde, einen Futtermittelzusatz für Mastgeflügel zur Verfügung zu stellen, der bei der Verfütterung von proteinarmem Futter das Gewicht der Tiere am Ende der Mast im Vergleich zur Fütterung mit einem proteinarmen Futter allein deutlich erhöht und möglichst das Gewicht erzielt, das bei der Verfütterung mit einer ausgewogenen proteinreichen Diät erzielt wird. Der vorliegenden Erfindung liegt weiterhin die Aufgabe zugrunde, einen Futtermittelzusatz für Mastgeflügel zur Verfügung zu stellen, der bei der Verfütterung von proteinarmen Futter die Uniformität des Gewichts der Tiere am Ende der Mast im Vergleich zur Fütterung mit einem proteinarmen Futter allein deutlich verbessert und möglichst die Uniformität erreicht, die bei der Verfütterung mit einer ausgewogenen proteinreichen Diät erzielt wird. Eine Aufgabe des Futtermittelzusatzes ist somit die Verminderung der Standardabweichung vom mittleren Schlachtgewicht am Ende der Mast.

Gelöst wird diese Aufgabe durch eine Verwendung gemäß Anspruch 1. Bevorzugte Ausführungsformen der Erfindung sind in den Unteransprüchen angegeben, die wahlweise miteinander kombiniert werden können.

Somit ist gemäß einer ersten Ausführung die Verwendung i) einer Zusammensetzung enthaltend Guanidinoessigsäure und Glycin, wobei die Zusammensetzung das Glycin als freie Säure oder in Form eines Salzes dieser Säure, enthält; und ii) einem proteinarmen Futter für Geflügel mit einem Rohproteingehalt im Bereich von 14,0 bis 18,5 Gew.-% (bezogen auf das Gesamtgewicht des Futters) während der Mast vom 11. bis 39. Lebenstag des Geflügels, zur Erhöhung der Mastleistung des Geflügels und/oder zur Erhöhung des Schlachtgewichts des Geflügels und/oder zur Verbesserung der Uniformität des Schlachtgewichts des Geflügels, wobei die Guanidinoessigsäure in einer Menge von 0,01 bis 0,20 Gew.-% bezogen auf das proteinarme Futter und wobei das Glycin in einer Menge von 0,01 bis 0,20 Gew.-% bezogen auf das proteinarme Futter eingesetzt wird, Gegenstand der vorliegenden Erfindung.

Erfindungswesentlich wird in der Mast von Geflügel eine Zusammensetzung enthaltend Guanidinoessigsäure und Glycin und ein proteinarmes Futter eingesetzt. Dabei ist gemäß der vorliegenden Erfindung unter einem proteinarmen Futter ein Futter zu verstehen, das einen Gehalt an Rohproteinen im Bereich von 14,0 bis 18,5 Gew.-% (bezogen auf das Futter) aufweist. Der Gehalt an Rohprotein gemäß der vorliegenden Erfindung wurde über den Stickstoff-Gehalt nach Kjeldahl mit Hilfe des Gerätes Büchi, AutoKjeldahl Unit K-370 bestimmt. Die Multiplikation des N-Gehaltes mit 6,25 ergibt den Gehalt an Rohprotein. Damit liegt die Annahme zugrunde, dass ein durchschnittliches Protein 16 Gew.-% Stickstoff enthält.

Gemäß einer bevorzugten Verwendung ist dabei vorgesehen, dass das proteinarme Futter für das Geflügel einen Rohproteingehalt im Bereich von 14,0 bis 18,0 Gew.-%, weiter bevorzugt im Bereich von 15,0 bis 18,0 Gew.-%, noch weiter bevorzugt im Bereich von 16,0 bis 18,0 Gew.-% und besonders bevorzugt im Bereich von 16,5 bis 18,0 Gew.-% und ganz besonders bevorzugt von 17,5 Gew.-% (bezogen auf das Gesamtgewicht des Futters) aufweist.

Weiter erfindungswesentlich ist vorgesehen, dass die Zusammensetzung und das proteinarme Futter während der Mast vom 11. bis 39. Lebenstag des Geflügels (nachfolgend auch Mastphase), und somit außerhalb der ersten Wachstumsphase der Tiere (nachfolgend auch Startphase) verwendet wird, die den ersten bis zum 10. Lebenstag des Geflügels umfasst. In der Mastphase wird im Vergleich zur Startphase sowohl absolut wie auch pro Tag eine deutlich größere Futtermenge konsumiert als auch ein größerer Gewichtszuwachs pro Tag erreicht. Daher ist es besonders ökonomisch interessant in dieser Mastphase ein proteinarmes Futter einzusetzen und nicht in der sensiblen Startphase von Tag 1 bis Tag 10 in die empfohlenen Diät einzugreifen. Auch die ab dem 40. Tag beginnende Phase ist von der vorliegenden Erfindung nicht umfasst, da mit zunehmendem Alter und Gewicht der Proteinbedarf in der Diät absinkt und zudem in der modernen Tiermast nur in wenigen Fällen ein Interesse an schwereren und somit älteren Tieren besteht.

Dabei wird erfindungsgemäß die Zusammensetzung enthaltend Guanidinoessigsäure und Glycin und das proteinarme Futter für Geflügel an wenigstens einem, mehr bevorzugt an wenigstens 5, noch mehr bevorzugt an wenigstens 10, insbesondere an wenigstens 20 und am meisten bevorzugt an allen Tagen vom 11. bis zum 39. Lebenstag des Geflügels eingesetzt.

Gemäß einer besonders bevorzugten Ausführung ist dabei vorgesehen, dass die Zusammensetzung aus Guanidinoessigsäure und Glycin besteht.

Guanidinoessigsäure (syn. Glycocyamin, N-Guanylglycin, N-Amidinoglycin; C₃H₇N₃O₂; CAS-Nr. 352-97-6) ist seit einiger Zeit als Futtermittelzusatz auf dem Markt erhältlich und ist in der Geflügelmast zugelassen. Vielfältige Studien haben u.a. gezeigt, dass Guanidinoessigsäure eine Verbesserung der Futteraufnahme und eine Steigerung der Mastleistung bewirkt.

Glycin (syn. Glycoll, Aminoessigsäure, Aminoethansäure; C₂H₅NO₂, CAS-Nr. 56-40-6) ist als Lebensmittelzusatzstoff E640 ohne Mengenbeschränkung in der EU zugelassen, und ist ebenfalls seit geraumer Zeit als Futtermittelzusatz auf dem Markt erhältlich. Studien für Hühner [Corzo A., Kidd, M.T. (2004) Poult. Sci. 83(8), 1382-4)] haben gezeigt, dass Glycin ein limitierender Nährstoff ist, obwohl er im Tier auch selbst produziert wird.

Im Gegensatz zu Kreatin weisen Guanidinoessigsäure und deren Salze in saurer wässriger Lösung eine deutlich höhere Stabilität auf und werden erst unter physiologischen Bedingungen in Kreatin umgewandelt. Guanidinoessigsäure wird hierbei erst nach der Resorption, vor allem in der Leber, in Kreatin umgewandelt. Somit wird im Gegensatz zum Kreatin der überwiegende Teil der verabreichten bzw. gefütterten Guanidinoessigsäure nicht durch Instabilitätsreaktionen, z. B. im Magen, abgebaut und vor der Resorption ausgeschieden, sondern steht tatsächlich für die entsprechenden physiologischen Stoffwechselreaktionen zur Verfügung.

Überraschender Weise hat sich nunmehr in Fütterungsversuchen gezeigt, dass die Verabreichung einer Zusammensetzung enthaltend Guanidinoessigsäure und Glycin zu dem gewünschten Nutzen, nämlich bei der Verfütterung von proteinarmen Futter zur Steigerung der Mastleistung und des Mastgewichtes der Tiere am Ende der Mast und zur Verbesserung der Uniformität des Gewichts der Tiere, führt.

Diejenigen Hühner, die ein mit Guanidinoessigsäure und Glycin angereichertes proteinarmes Futter erhalten haben, haben im Vergleich zur Kontrollgruppe, die dasselbe proteinarme Futter jedoch ohne Zusatz von Guanidinoessigsäure und Glycin erhalten hat, ein besseres Wachstum und ein höheres Schlachtgewicht erreicht. Diese Wirkung ist im Vergleich zu allein mit Glycin angereichertem Futter sowie im Vergleich zu allein mit Guanidinoessigsäure angereichertem Futter zu beobachten, wobei vollkommen überraschend eine synergistische Wirkung der beiden Einzelstoffe beobachtet wird.

Im Tierkörper kann die nicht essentielle Aminosäure Glycin gebildet werden aus 3-Phosphoglycerat, einem Intermediat der Glycolyse, über Serin als Zwischenschritt. In einem weiteren Schritt wird aus Glycin und L-Arginin die Guanidinoessigsäure gebildet. Guanidinoessigsäure wird weiter zu Kreatin methyliert. Kreatin spielt eine wichtige Rolle in der Energiebereitstellung der Zelle. Da die Guanidinoessigsäure aus Glycin gebildet wird, war nicht zu erwarten, dass bei Verabreichung beider Komponenten ein positiver synergistischer Effekt auftritt. Ohne an die Theorie gebunden zu sein, wird daher angenommen, dass die gleichzeitige Gabe von Guanidinoessigsäure und von Glycin positive Effekte aufweist, die nicht an den Energiestoffwechsel gekoppelt sind.

Die Verabreichung der erfindungsgemäßen Zusammensetzung enthaltend Guanidinoessigsäure und Glycin kann auf unterschiedliche Art und Weise realisiert werden. So kann die Zusammensetzung als Feststoffzubereitung vermengt mit dem proteinarmen Futter oder gelöst in Wasser als Tränklösung eingesetzt werden. Somit ist auch eine bevorzugte Verwendung Gegenstand der Erfindung in der die Zusammensetzung a) als Feststoffzubereitung vermengt mit dem proteinarmen Futter für das Geflügel bereitgestellt wird oder b) als Tränklösung für das Geflügel separat von dem proteinarmen Futter bereitgestellt wird. In jedem Fall sollte die Tränklösung, das proteinarme Futter oder das proteinarme Futter in das die Zusammensetzung als Feststoffzubereitung vermengt wurde ad-libitum zur Verfügung gestellt werden. Somit ist auch eine bevorzugte Verwendung Gegenstand der Erfindung in dem die Zusammensetzung a) als Feststoffzubereitung vermengt mit dem proteinarmen Futter für das Geflügel ad-libitum bereitgestellt wird oder b) als Tränklösung für das Geflügel separat von dem proteinarmen Futter bereitgestellt werden, wobei die Tränklösung und das proteinarme Futter ad-libitum bereitgestellt werden.

Im Zusammenhang mit der vorliegenden Erfindung soll unter dem Begriff "ad-libitum" eine Menge an proteinarmem Futter, eine Menge an Tränklösung oder eine Menge an proteinarmem Futter in das die Zusammensetzung vermengt wurde, verstanden sein, die den täglichen Bedarf an Futter und an Tränklösung für die Ernährung, bezogen auf die Gesamtheit an Individuen in der Mast, übersteigt. Somit soll gemäß der vorliegenden Erfindung das Futter oder die Tränklösung vorzugsweise "ad-libitum", nämlich im Überschuss zur freien Verwendung des Geflügels bereitgestellt werden.

Somit unterscheidet sich die bevorzugte Verwendung ad libitum deutlich von einer spezifischen Verabreichung eines Wirkstoffes, der beispielsweise täglich in Form einer definierten Menge von 500 mg pro Tag in Einzeldosen und unabhängig von weiteren Nahrungs- oder Lebensmitteln verabreicht wird. Umso überraschender ist es, dass die alleinige Bereitstellung von dem proteinarmen Futter ad libitum, nämlich zur freien Verfügung des Geflügels und der Zusammensetzung enthaltend Guanidinoessigsäure und Glycin, insbesondere einer Zusammensetzung bestehend aus Guanidinoessigsäure und Glycin zu dem erwünschten Erfolg, nämlich zur Erhöhung der Mastleistung des Geflügels und/oder zur Erhöhung des Schlachtgewichts des Geflügels und/oder zur Verbesserung der Uniformität des Schlachtgewichts des Geflügels, führt.

Es hat sich gezeigt, dass die erfindungsgemäße Verwendung der Guanidinoessigsäure in Kombination mit Glycin nicht auf die Substanzen als solche beschränkt ist. Vielmehr hat sich gezeigt, dass in der Verwendung sowohl Guanidinoessigsäure als solche, nämlich als freie Säure, oder auch als Salz der Guanidinoessigsäure eingesetzt werden kann.

Besonders bevorzugt kann dabei als Salz ein Salz ausgewählt aus der Gruppe der Alkali- oder Erdalkalisalze der Guanidinoessigsäure eingesetzt werden. Ganz besonders bevorzugt können hierbei Natrium-Guanidinoacetat, Kalium-Guanidinoacetat, Magnesium-Guanidinoacetat oder Calcium-Guanidinoacetat, eingesetzt werden.

Weiterhin hat sich gezeigt, dass in der Verwendung sowohl Gycin als solches, nämlich als freie Säure, oder auch in Form eines Salzes des Glycins eingesetzt werden kann. Besonders bevorzugt kann dabei als Salz ein Salz ausgewählt aus der Gruppe der Alkali- oder Erdalkalisalze des Glycins, insbesondere Natrium-Glycinat, Kalium-Glycinat, Magnesium-Glycinat oder Calcium-Glycinat eingesetzt werden.

Somit ist auch eine bevorzugte Verwendung der vorliegenden Erfindung umfasst, in der die Zusammensetzung
i) die Guanidinoessigsäure als freie Säure oder in Form eines Salzes dieser Säure und/oder
ii) das Glycin als freie Säure oder in Form eines Salzes dieser Säure,
enthält, insbesondere besteht.

Besonders bevorzugt ist jedoch die Verwendung einer Zusammensetzung, die Guanidinoessigsäure als freie Säure und Glycin als freie Säure enthält. Ganz besonders bevorzugt ist die Verwendung einer Zusammensetzung, die aus Guanidinoessigsäure als freie Säure und Glycin als freie Säure besteht.

Im Zusammenhang mit den zugrundeliegenden Untersuchungen hat sich gezeigt, dass die zu verwendenden Mengen an Guanidinoessigsäure und an Glycin auf ein gewisses Maß und Verhältnis beschränkt sind. Besonders gute Ergebnisse können erzielt werden, wenn die Guanidinoessigsäure in einer Menge von mindestens 0,01 Gew.-%, bevorzugt von mindestens 0,02 Gew.-%, weiter bevorzugt von mindestens 0,03 Gew.-%, weiter bevorzugt von mindestens 0,04 Gew.-% und von gleichzeitig höchstens 0,20 Gew.-%, weiter bevorzugt höchstens 0,15 Gew.-%, weiter bevorzugt höchstens 0,12 Gew.-%, besonders bevorzugt von höchstens 0,10 Gew.-% und ganz besonders bevorzugt von höchstens 0,08 Gew.-% (jeweils bezogen auf das proteinarme Futter), eingesetzt wird.

Soweit die Guanidinoessigsäure und/oder das Glycin nicht als freie Säure, sondern in Form eines Salzes eingesetzt wird, beziehen sich die Gewichtsangaben hierin immer auf den Anteil der Guanidinoessigsäure im Guanidinoessigsäuresalz bzw. den Anteil des Glycins im Glycinsalz.

Weiterhin gute Ergebnisse können erzielt werden, wenn das Glycin in einer Menge von mindestens 0,01 Gew.-%, bevorzugt von mindestens 0,02 Gew.-%, weiter bevorzugt von mindestens 0,03 Gew.-%, weiter bevorzugt von mindestens 0,04 Gew.-% und von gleichzeitig höchstens 0,20 Gew.-%, weiter bevorzugt höchstens 0,15 Gew.-%, weiter bevorzugt höchstens 0,12 Gew.-%, besonders bevorzugt von höchstens 0,10 Gew.-% und ganz besonders bevorzugt von höchstens 0,08 Gew.-% (jeweils bezogen auf das proteinarme Futter), eingesetzt wird.

Gemäß der erfindungsgemäßen Verwendung ist daher vorgesehen, dass die Guanidinoessigsäure in einer Menge von 0,01 bis 0,20 Gew.-%,
bevorzugt von 0,02 bis 0,15 Gew.-% und besonders bevorzugt von 0,04 bis 0,10 Gew.-% (jeweils bezogen auf das proteinarme Futter), eingesetzt wird und dass das Glycin in einer Menge von 0,01 bis 0,20 Gew.-%, bevorzugt von 0,02 bis 0,15 Gew.-% und besonders bevorzugt von 0,04 bis 0,10 Gew.-% (jeweils bezogen auf das proteinarme Futter), eingesetzt wird.

Gemäß einer bevorzugten Ausführung der Erfindung kann vorgesehen sein, dass die Verwendung derart erfolgt, dass die Zusammensetzung als Feststoffzubereitung vermengt mit dem proteinarmen Futter für das Geflügel bereitgestellt wird. Weiter bevorzugt wird die Zusammensetzung als Feststoffzubereitung vermengt mit dem proteinarmen Futter für das Geflügel bereitgestellt, wobei die Zusammensetzung die Guanidinoessigsäure in einer Menge von 0,01 bis 0,20 Gew.-%, bevorzugt von 0,02 bis 0,15 Gew.-% und besonders bevorzugt von 0,04 bis 0,10 Gew.-% (jeweils bezogen auf das proteinarme Futter), eingesetzt wird und/oder das Glycin in einer Menge von 0,01 bis 0,20 Gew.-%, bevorzugt von 0,02 bis 0,15 Gew.-% und besonders bevorzugt von 0,04 bis 0,10 Gew.-% (jeweils bezogen auf das proteinarme Futter), enthält, insbesondere aus den genannten Mengen besteht.

Gemäß einer weiter bevorzugten Ausführung der Erfindung erfolgt die Verwendung derart, dass die Zusammensetzung als Feststoffzubereitung vermengt mit dem proteinarmen Futter für das Geflügel bereitgestellt wird, wobei die Zusammensetzung aus Guanidinoessigsäure in einer Menge von 0,03 bis 0,08 Gew.-% und Glycin in einer Menge von 0,03 bis 0,08 Gew.-% (jeweils bezogen auf das proteinarme Futter) besteht.

Weiter bevorzugt kann eine Zusammensetzung eingesetzt werden, die Guanidinoessigsäure und Glycin enthält, insbesondere aus Guanidinoessigsäure und Glycin besteht, wobei das Gewichtsverhältnis Guanidinoessigsäure zu Glycin im Bereich von 2 : 1 bis 1 : 2, bevorzugt von 1,8 : 1 bis 1 : 1,8, weiter bevorzugt von 1,5 : 1 bis 1 : 1,5, besonders bevorzugt von 1,3 : 1 bis 1 : 1,3 und ganz besonders bevorzugt bei 1 : 1 liegt.

Besonders bevorzugt ist eine Verwendung einer Zusammensetzung, die aus der Guanidinoessigsäure und dem Glycin in gleichen Teilen besteht.

Gemäß einer ganz besonders bevorzugten Ausführung der Erfindung erfolgt die Verwendung derart, dass die Zusammensetzung als Feststoffzubereitung vermengt mit dem proteinarmen Futter für das Geflügel bereitgestellt wird, wobei die Zusammensetzung aus Guanidinoessigsäure in einer Menge von 0,03 bis 0,08 Gew.-% und Glycin in einer Menge von 0,03 bis 0,08 Gew.-% (jeweils bezogen auf das proteinarme Futter) besteht und das wobei das Gewichtsverhältnis Guanidinoessigsäure zu Glycin im Bereich von 1,5 : 1 bis 1 : 1,5, insbesondere bei 1 : 1, liegt.

Gemäß einer bevorzugten Ausführung der Erfindung kann vorgesehen sein, dass die Verwendung derart erfolgt, dass die Zusammensetzung als Tränklösung für das Geflügel separat von dem Futter bereitgestellt wird. Derartige Tränklösungen enthalten Wasser und die Zusammensetzung. Weiterhin kann die Verwendung besonders bevorzugt ausgeführt werden, wenn als Wasser Trinkwasser, Quellwasser, Brunnenwasser oder Leitungswasser verwendet wird.

Besonders bevorzugt enthalten derartige Tränklösungen Wasser, Guanidinoessigsäure in einer Menge von 0,05 bis 1,2 g pro Liter Wasser und Glycin in einer Menge von 0,05 bis 1,2 g pro Liter Wasser.

Somit kann gemäß einem weiterführenden Gedanken die Verwendung auch derart erfolgen, dass die Zusammensetzung als Tränklösung für das Geflügel bereitgestellt wird und die Tränklösung Wasser, die Guanidinoessigsäure in einer Menge von 0,05 bis 1,2 g pro 1 Liter Wasser, insbesondere von 0,1 bis 0,9 g pro 1 Liter Wasser, insbesondere von 0,15 bis 0,6 g pro 1 Liter Wasser, besonders bevorzugt von 0,2 bis 0,5 g pro 1 Liter Wasser und das Glycin in einer Menge von 0,05 g bis 1,2 g pro 1 Liter Wasser, insbesondere von 0,1 bis 0,9 g pro 1 Liter Wasser, insbesondere von 0,15 bis 0,6 g pro 1 Liter Wasser, besonders bevorzugt von 0,2 bis 0,5 g pro 1 Liter Wasser, enthält.

Weiter bevorzugt kann die Verwendung derart erfolgen, dass die Zusammensetzung als Tränklösung für das Geflügel bereitgestellt wird und die Tränklösung Wasser, die Guanidinoessigsäure in einer Menge von 0,05 bis 1,2 g pro 1 Liter Wasser und das Glycin in einer Menge von 0,05 g bis 1,2 g pro 1 l Wasser enthält, wobei das Gewichtsverhältnis Guanidinoessigsäure zu Glycin im Bereich von 1,5 : 1 bis 1 : 1,5, insbesondere bei 1 : 1, liegt.

Die hierin beschriebene Erfindung kann bei einer Vielzahl an verschiedenen Geflügel Anwendung finden. Besonders bevorzugt kann die Zusammensetzung enthaltend Guanidinoessigsäure und Glycin, insbesondere bestehend aus Guanidinoessigsäure und Glycin, und das proteinarme Futter bei Geflügel ausgewählt aus der Gruppe Hühner, Broiler, Hähnchen, Hühnchen verwendet werden.

Weiterhin hat sich mit den der Erfindung zugrundeliegenden Untersuchungen gezeigt, dass das eingesetzte proteinarme Futter einen definierten Brennwert haben sollte. Einerseits sollte das proteinarme Futter einen für die normale Ernährung und gesundes Wachstum festgelegten Brennwert nicht unterschreiten und andererseits auch nicht überschreiten, um eine Fettleibigkeit zu vermeiden. So haben sich gute Ergebnisse gezeigt, wenn das Futter für das Geflügel einen Brennwert von 8 MJ bis 20 MJ pro 1 kg Futter, insbesondere von 10 MJ bis 15 MJ pro 1 kg Futter aufweist und/ oder das Futter ein bilanziertes Futter gemäß Animal Nutrition Handbook, 3rd Revision, 2014 Section 12, Poultry Nutrition and Feeding ist.

Dabei kann sowohl das Verfahren als auch die Verwendung besonders bevorzugt ausgeführt werden, wenn das proteinarme Futter mindestens ein Getreide, ein Getreidemehl, ein Getreideschrot oder Extrakte hieraus, umfasst. Weiterhin bevorzugt ist hierbei eine Verwendung in dem mindestens ein Getreide, ein Getreidemehl, ein Getreideschrot oder Extrakte hieraus, ausgewählt wird aus der Gruppe:
a. Mais, Maismehl, Maisschrot oder ein Extrakt hieraus,
b. Hirse, Hirsemehl, Hirseschrot oder ein Extrakt hieraus,
c. Soja, Sojamehl, Sojaschrot oder ein Extrakt hieraus,
d. Weizen, Weizenmehl, Weizenschrot oder ein Extrakt hieraus,
e. Gerste, Gerstenmehl, Gerstenschrot oder ein Extrakt hieraus,
f. Sonnenblume, Sonnenblumenmehl, Sonnenblumenschrot oder ein Extrakt hieraus, und/oder
g. Raps, Rapsmehl oder Rapsextraktionsschrot.

Weiterhin kann die Verwendung besonders bevorzugt ausgeführt werden, wenn das proteinarme Futter mindestens einen weiteren Futtermittelzusatz, insbesondere einen weiteren Futtermittelzusatz aus der Gruppe der Mineralstoffe, Aminosäuren und Vitamine, umfasst. Ganz besonders bevorzugt kann dieser Futtermittelzusatz ausgewählt werden aus der Gruppe Calciumcarbonat, Mono- oder Dicalciumphosphat, Lysin, Methionin, Threonin, Thryptophan, Valin, Arginin und Vitamine sowie Mischungen davon.

Ein bevorzugtes Basisfutter umfasst somit im wesentlichen Mais oder Maisbestandteile, Hirse oder Hirsebestandteile, Weizen oder Weizenbestandteile, Gerste oder Gestenbestandteile, Sonnenblume oder Sonnenblumenbestandteile.

Das bevorzugte Futtermittel enthält insbesondere nur eine beschränkte Menge an proteinreichen Futtermitteln aus der Raps- und Sojapflanze.

Insbesondere betrifft die Erfindung eine Zusammensetzung bestehend aus Guanidinoessigsäure und Glycin zur Verwendung als Futtermittelzusatz für Geflügel, insbesondere für Mastgeflügel, bei der Verfütterung von proteinarmen Futter zur Steigerung der Mastleistung und des Mastgewichtes der Tiere am Ende der Mast und zur Verbesserung der Uniformität des Gewichts der Tiere.

Die bevorzugten Ausgestaltungen für die erfindungsgemäße Zusammensetzung sind bei den erfindungsgemäßen Verwendungen beschrieben.

Die nachfolgenden Beispiele sollen die vorliegende Erfindung veranschaulichen.

### Beispiele

66.000 Masthähnchen Ross 308 im Alter von 11 Tagen, d.h. zu Beginn der Mastphase (grower) bei Mastbeginn, wurden gleichmäßig verteilt in 6 baugleichen Stallungen. Gefüttert wurde mit Pellets (<3 mm Durchmesser, < 7 mm Länge) bis zum Versuchsende. Die Zusammensetzung des Futters war konstant innerhalb einer Gruppe und wurde in seiner Zusammensetzung bis zum Versuchsende nicht angepasst.

Die Lufttemperatur betrug zwischen 20 und 23°C bei einer Luftfeuchte zwischen 60 und 75%. Wasser wurde durch Nippeltränken gereicht, mit 12 Tieren pro Nippel und die Höhe der Nippeltränke wurde dem Alter der Tiere angepasst. Am Futterschalensystem teilten sich 45 Tier eine Futterschale. Die Einstreutiefe betrug 5 cm und die Einstreu war gleichmäßig verteilt.

Als Empfehlung wird beispielsweise für Ross Broiler ein Rohprotein-Gehalt von 21,5 Gew.-% zwischen dem 11. Tag bis zum 24. Tag und von 19,5 Gew.-% ab dem 25. Tag bis zur Vermarktung angegeben. Als proteinarmes Futter, dessen Rohproteingehalt mindestens 10 % unter den Empfehlungen liegt, wurde daher ein Rohproteingehalt von 17,5 Gew.-% eingestellt. Der Rohproteingehalt wurde durch Bestimmung des N-Gehaltes der fertigen Futtermittelmischung nach der Kjeldahl-Methode ermittelt unter Zugrundelegung, dass Proteine einen Stickstoffgehalt von 16 Gew.-% aufweisen.

Die Futtermittelmischung wurde aus Mais, Sojamehl, Sojaöl, Calciumphosphate, Grit, Salz, Natriumhydrogencarbonat, Vitaminsupplement: Zusatzstoffe pro kg Vitamin A 13.000 I.E., Vitamin D3 5.000 I.E., Vitamin E 100 mg, Kupfer 10 mg, Selen 0,42 mg hergestellt. Zur Herstellung des proteinarmen Futters wurde die Maismenge erhöht und die Menge Sojamehl verringert. Konstant gehalten wurde die Konzentration an Methionin durch zusätzliche Zugabe zum proteinarmen Futter, so dass bei beiden Varianten 0,57 % Methionin im Futter resultierten. Die metabolische Energie wurde auf 3200 kcal/kg eingestellt.

Die Mischung wurde ansonsten entsprechend den Empfehlungen der Nutrition Specification für Ross Broiler, Tabelle 2, hergestellt [http://tmea.aviagen.com/assets/Tech_Center/Ross_Broiler/RossBroilerNutritionSpecs2019-EN.pdf].

Der Unterschied der beiden Futtermittelmischungen lag demnach im Gehalt an Rohprotein: Das Standardfutter hatte einen Rohproteingehalt von 19,8 Gew.-%, das proteinarme Futter einen Rohproteingehalt von 17,5 Gew.-%.

Von dem proteinarmen Futtermittel wurden durch Zugabe von Guanidinoessigsäure (GAA) oder von Glycin (Gly) oder von Guanidinoessigsäure und Glycin vier weitere Varianten von proteinarmem Futter hergestellt. Mit allen Futtermittelmischungen wurden Pellets der oben beschriebenen Größe extrudiert.

Somit standen folgende Futter zur Verfügung:
Versuch 1 (V-1): Standarddiät mit 19,8 Gew.-% Rohprotein
Versuch 2 (V-2): Proteinarme Diät mit 17,5 Gew.-% Rohprotein
Versuch 3 (V-3): Proteinarme Diät mit 17,5 Gew.-% Rohprotein und 0,05 Gew.-% GAA
Versuch 4 (V-4): Proteinarme Diät mit 17,5 Gew.-% Rohprotein und 0,1 Gew.-% GAA
Versuch 5 (V-5): Proteinarme Diät mit 17,5 Gew.-% Rohprotein und 0,05 Gew.-% Gly
Versuch 6 (V-6): Proteinarme Diät mit 17,5 Gew.-% Rohprotein und je 0,05 Gew.-% GAA und Gly

Die Tiere wurden in den 6 Gruppen mit dem oben beschriebenen Futter ad libitum und Wasser ebenfalls ad libitum versorgt. Am Versuchsende nach dem 38. Tag wurden die Tiere entnommen und das durchschnittliche Lebendgewicht ermittelt. Stallverluste lagen bei allen Versuchsgruppen in vergleichbarem Rahmen, nämlich zwischen 2,18 % bis 2,30 %.

Zur Erhebung der Standardabweichung (SD) wurden bei der Entnahme von jeder Versuchsgruppe 100 Einzeltiere während des Entnahmevorgangs einzeln gewogen und hieraus die Standardabweichung ermittelt. Um die Standardabweichung der verschiedenen Versuche vergleichbar zu machen, wurde die Standardabweichung von Versuch 1 auf den Wert 1 normiert und als "Standardabweichung normiert" (SDnorm) bezeichnet. SDnorm von Versuchen 2 bis 6 wurde ermittelt indem die jeweilige Standardabweichung durch die Standardabweichung von Versuch 1 dividiert wurde. Die Ergebnisse sind in untenstehender Tabelle 1 dargestellt.

**Tabelle 1: Ergebnisse der Fütterungsstudie**

| | V-1 | V-2 | V-3 | V-4 | V-5 | V-6 |
|---|---|---|---|---|---|---|
| Endgewicht [g] | 2120 | 2005 | 2034 | 2027 | 2016 | 2115 |
| SD [g] | 207 | 271 | 243 | 237 | 266 | 221 |
| SDnorm | 1 | 1,31 | 1,17 | 1,14 | 1,29 | 1,07 |

Wie zu erwarten, wurde mit 2120 g das höchste Endgewicht und die geringste Standardabweichung vom mittleren Endlebendgewicht erzielt bei Versuch 1, bei dem die Futtermittelzusammensetzung den Empfehlungen entsprach. Bei einer proteinarmen Diät ohne weiteren Zusatz (Versuch 2), also bei einem um 10 % reduzierten Anteil an Proteinen im Futtermittel relativ zu den offiziellen Empfehlungen wurde ein deutlich verringertes Endgewicht von 2005 g gefunden. SDnorm lag mit 1,31 deutlich über dem Referenzwert von 1 und zeugt von der großen Inhomogenität des Bestandes.

Sowohl die Zugabe von GAA mit verschiedenen Konzentrationen in den Versuchen 3 und 4 als auch die Zugabe von Glycin im Versuch 5 führte bei dem Endgewicht nur zu einer geringfügigen Verbesserung relativ zur proteinarmen Diät von Versuch 2, nämlich von 2005 g auf 2034 g, 2027 g und 2016 g. Jedoch wurde insbesondere bei Fütterung mit GAA bei den Versuchen 3 und 4 eine verbesserte Uniformität des Bestandes erreicht und SDnorm lag bei 1,17 und 1,14. Dies stellt relativ zur 1,31 bei der proteinarmen Diät von Versuch 2 eine deutliche Verbesserung dar, ist aber noch deutlich verschieden von der Uniformität bei Standardfutter im Versuch 1.

Im Versuch 6, bei dem das Futter mit GAA und mit Glycin supplementiert wurde, konnte mit einem Endgewicht von 2115 g annähernd das Gewicht der Vergleichsgruppe 1 erreicht werden. SDnorm lag mit 1,07 nur noch unwesentlich über dem Vergleichswert von Versuch 1.

Vollkommen überraschend hat sich somit gezeigt, dass die Supplementierung eines proteinarmen Basisfutters mit Glycin und Guanidinoessigsäure die Nachteile einer proteinarmen Diät auf Wachstum und Uniformität nahezu vollständig ausgleicht.

## Patentansprüche

1. Verwendung i) einer Zusammensetzung enthaltend Guanidinoessigsäure und Glycin, wobei die Zusammensetzung das Glycin als freie Säure oder in Form eines Salzes dieser Säure, enthält; und ii) einem proteinarmen Futter für Geflügel mit einem Rohproteingehalt im Bereich von 14,0 bis 18,5 Gew.-% (bezogen auf das Gesamtgewicht des Futters) während der Mast vom 11. bis 39. Lebenstag des Geflügels, zur Erhöhung der Mastleistung des Geflügels und/oder zur Erhöhung des Schlachtgewichts des Geflügels und/oder zur Verbesserung der Uniformität des Schlachtgewichts des Geflügels, wobei die Guanidinoessigsäure in einer Menge von 0,01 bis 0,20 Gew.-% bezogen auf das proteinarme Futter und wobei das Glycin in einer Menge von 0,01 bis 0,20 Gew.-% bezogen auf das proteinarme Futter eingesetzt wird.

2. Verwendung nach Anspruch 1, **dadurch gekennzeichnet, dass** die Zusammensetzung als Feststoffzubereitung vermengt mit dem proteinarmen Futter für das Geflügel bereitgestellt wird oder, dass die Zusammensetzung als Tränklösung für das Geflügel separat von dem proteinarmen Futter bereitgestellt wird.

3. Verwendung nach einem der vorgenannten Ansprüche, **dadurch gekennzeichnet, dass** die Zusammensetzung die Guanidinoessigsäure als freie Säure oder in Form eines Salzes dieser Säure enthält.

4. Verwendung nach einem der vorgenannten Ansprüche, **dadurch gekennzeichnet, dass** die Guanidinoessigsäure in Form eines Salzes der Guanidinoessigsäure verwendet wird, wobei das Salz ausgewählt wird aus der Gruppe der Alkali- oder Erdalkalisalze der Guanidinoessigsäure, insbesondere Natrium-Guanidinoacetat, Kalium-Guanidinoacetat, Magnesium-Guanidinoacetat oder Calcium-Guanidinoacetat.

5. Verwendung nach mindestens einem der vorgenannten Ansprüche, **dadurch gekennzeichnet, dass** das Glycin in Form eines Salzes des Glycins verwendet wird, wobei das Salz ausgewählt wird aus der Gruppe der Alkali- oder Erdalkalisalze des Glycins, insbesondere Natrium-Glycinat, Kalium-Glycinat, Magnesium-Glycinat oder Calcium-Glycinat.

6. Verwendung nach einem der vorhergehenden Ansprüche, **dadurch gekennzeichnet, dass** die Guanidinoessigsäure in einer Menge von 0,02 bis 0,15 Gew.-% und besonders bevorzugt von 0,04 bis 0,10 Gew.-%, jeweils bezogen auf das proteinarme Futter, eingesetzt wird.

7. Verwendung nach einem der vorhergehenden Ansprüche, **dadurch gekennzeichnet, dass** das Glycin in einer Menge von 0,02 bis 0,15 Gew.-% und besonders bevorzugt von 0,04 bis 0,10 Gew.-%, jeweils bezogen auf das proteinarme Futter, eingesetzt wird.

8. Verwendung nach einem der vorhergehenden Ansprüche, **dadurch gekennzeichnet, dass** die Zusammensetzung als Tränklösung für das Geflügel bereitgestellt wird und die Tränklösung Wasser, die Guanidinoessigsäure in einer Menge von 0,05 bis 1,2 g pro 1 l Wasser und das Glycin in einer Menge von 0,05 g bis 1,2 g pro 1 l Wasser enthält.

9. Verwendung nach einem der vorhergehenden Ansprüche, **dadurch gekennzeichnet, dass** die Guanidinoessigsäure und das Glycin in einem Gewichtsverhältnis Guanidinoessigsäure zu Glycin im Bereich von 2:1 bis 1:2 eingesetzt wird.

10. Verwendung nach einem der vorgenannten Ansprüche, **dadurch gekennzeichnet, dass** das Geflügel ausgewählt ist aus der Gruppe Hühner, Broiler, Hähnchen, Hühnchen.

11. Verwendung nach einem der vorhergehenden Ansprüche zur Verbesserung der Uniformität des Schlachtgewichts des Geflügels.

12. Verwendung nach einem der vorhergehenden Ansprüche, wobei das proteinarme Futter einen Brennwert von 8 MJ/kg bis 20 MJ/kg aufweist.

## Claims

1. Use of i) a composition comprising guanidinoacetic acid and glycine, wherein the composition comprises glycine as a free acid or in the form of a salt of this acid; and ii) a low protein feed for poultry having a crude protein content in the range of 14.0 to 18.5 wt. % (based on the total weight of the feed) during fattening from the 11th to the 39th day of life of the poultry, for increasing the fattening performance of the poultry and/or for increasing the slaughter weight of the poultry and/or for improving the uniformity of the slaughter weight of the poultry, wherein the guanidinoacetic acid is used in an amount of from 0.01 to 0.20 wt. % based on the low protein feed and wherein the glycine is used in an amount of from 0.01 to 0.20 wt. % based on the low protein feed.

2. Use according to claim 1, **characterized in that** the composition is provided as a solid preparation mixed with the low protein feed for the poultry or, that the composition is provided as a drinkable solution for the poultry separately from the low protein feed.

3. Use according to any one of the preceding claims, **characterized in that** the composition comprises guanidinoacetic acid as a free acid or in the form of a salt of this acid.

4. Use according to any one of the preceding claims, **characterized in that** the guanidinoacetic acid is used in the form of a salt of the guanidinoacetic acid, the salt being selected from the group of alkali metal or alkaline earth metal salts of the guanidinoacetic acid, in particular sodium guanidinoacetate, potassium guanidinoacetate, magnesium guanidinoacetate or calcium guanidinoacetate.

5. Use according to at least one of the preceding claims, **characterized in that** the glycine is used in the form of a salt of the glycine, the salt being selected from the group of alkali metal or alkaline earth metal salts of the glycine, in particular sodium glycinate, potassium glycinate, magnesium glycinate or calcium glycinate.

6. Use according to any one of the preceding claims, **characterized in that** the guanidinoacetic acid is used in an amount of from 0.02 to 0.15 wt. % and particularly preferably from 0.04 to 0.10 wt. %, in each case based on the low protein feed.

7. Use according to any one of the preceding claims, **characterized in that** the glycine is used in an amount of from 0.02 to 0.15 wt. % and particularly preferably from 0.04 to 0.10 wt. %, in each case based on the low protein feed.

8. Use according to any one of the preceding claims, **characterized in that** the composition is provided as a drinkable solution for the poultry and the drinkable solution comprises water, the guanidinoacetic acid in an amount of 0.05 to 1.2 g per 1l of water and the glycine in an amount of 0.05 g to 1.2 g per 1 l of water.

9. Use according to any one of the preceding claims, **characterized in that** the guanidinoacetic acid and the glycine are used in a weight ratio of guanidinoacetic acid to glycine ranging from 2 : 1 to 1 : 2.

10. Use according to any one of the preceding claims, **characterized in that** the poultry is selected from the group consisting of chickens, broilers, young male chickens, young female chickens.

11. Use according to any one of the preceding claims for improvement of the uniformity of the slaughter weight of the poultry.

12. Use according to any one of the preceding claims, wherein the low protein feed has a calorific value of 8 MJ/kg to 20 MJ/kg.

## Revendications

1. Utilisation i) d'une composition contenant de l'acide guanidinoacétique et de la glycine, ladite composition contenant la glycine sous forme d'acide libre ou sous forme d'un sel de cet acide ; et ii) un aliment pour volaille pauvre en protéines, ayant une teneur en protéines brutes comprise entre 14,0 et 18,5 % en poids (par rapport au poids total de l'aliment) pendant l'engraissement, du 11e au 39e jour de vie de la volaille, pour augmenter les performances d'engraissement de la volaille et/ou pour augmenter le poids à l'abattage de la volaille et/ou pour améliorer l'uniformité du poids à l'abattage de la volaille, l'acide guanidinoacétique étant utilisé en une quantité comprise entre 0,01 et 0,20 % en poids par rapport à l'aliment pauvre en protéines et la glycine étant utilisée en une quantité comprise entre 0,01 et 0,20 % en poids par rapport à l'aliment pauvre en protéines.

2. Utilisation selon la revendication 1, **caractérisée en ce que** la composition est fournie sous forme de préparation solide mélangée à l'aliment pauvre en protéines pour la volaille ou **en ce que** la composition est fournie sous forme de solution d'abreuvement pour la volaille séparément de l'aliment pauvre en protéines.

3. Utilisation selon l'une des revendications précédentes, **caractérisée en ce que** la composition contient l'acide guanidinoacétique sous forme d'acide libre ou sous forme d'un sel de cet acide.

4. Utilisation selon l'une des revendications précédentes, **caractérisée en ce que** l'acide guanidinoacétique est utilisé sous forme d'un sel de l'acide guanidinoacétique, le sel étant choisi dans le groupe des sels alcalins ou alcalino-terreux de l'acide guanidinoacétique, en particulier le guanidinoacétate de sodium, l'acétate de potassium et guanidino, l'acétate de magnésium et guanidino ou l'acétate de calcium et guanidino.

5. Utilisation selon au moins l'une des revendications précédentes, **caractérisée en ce que** la glycine est utilisée sous forme d'un sel de glycine, le sel étant choisi parmi le groupe des sels alcalins ou alcalino-terreux de glycine, en particulier le glycinate de sodium, le glycinate de potassium, le glycinate de magnésium ou le glycinate de calcium.

6. Utilisation selon l'une des revendications précédentes, **caractérisée en ce que** l'acide guanidinoacétique est utilisé en une quantité de 0,02 à 0,15 % en poids et de préférence de 0,04 à 0,10 % en poids, dans chaque cas par rapport à l'aliment pauvre en protéines.

7. Utilisation selon l'une des revendications précédentes, **caractérisée en ce que** la glycine est utilisée en une quantité comprise entre 0,02 et 0,15 % en poids et de préférence entre 0,04 et 0,10 % en poids, dans chaque cas par rapport à l'aliment pauvre en protéines.

8. Utilisation selon l'une des revendications précédentes, **caractérisée en ce que** la composition est fournie sous forme de solution d'abreuvement pour la volaille et que la solution d'abreuvement contient de l'eau, l'acide guanidinoacétique en une quantité comprise entre 0,05 et 1,2 g pour 1 l d'eau et la glycine en une quantité comprise entre 0,05 et 1,2 g pour 1 l d'eau.

9. Utilisation selon l'une des revendications précédentes, **caractérisée en ce que** l'acide guanidinoacétique et la glycine sont utilisés dans un rapport pondéral acide guanidinoacétique/glycine compris entre 2:1 et 1:2.

10. Utilisation selon l'une des revendications précédentes, **caractérisée en ce que** la volaille est choisie parmi le groupe comprenant les poulets, les poulets de chair, les poulets de chair à griller et les poules.

11. Utilisation selon l'une des revendications précédentes pour améliorer l'uniformité du poids d'abattage de la volaille.

12. Utilisation selon l'une des revendications précédentes, l'aliment pauvre en protéines ayant une valeur énergétique comprise entre 8 MJ/kg et 20 MJ/kg.
